# EUROPÄISCHE PATENTSCHRIFT

(11) **EP 2 910 886 B1**
(45) Veröffentlichungstag und Bekanntmachung des Hinweises auf die Patenterteilung: **14.06.2017**
(21) Anmeldenummer: 15151275.3
(22) Anmeldetag: 15.01.2015
(51) Int. Cl.: F28F 1/40, B21D 53/08

(54) **Wärmeübertrager**
Heat exchanger
Caloporteur

(30) Priorität: 16.01.2014 DE 102014200680
(43) Veröffentlichungstag der Anmeldung: 26.08.2015
(73) Patentinhaber: MAHLE International GmbH, 70376 Stuttgart (DE)
(72) Erfinder: Kölblin, Rüdiger, 73732 Esslingen (DE)
(74) Vertreter: Grauel, Andreas

(56) Entgegenhaltungen:
- EP-A1- 1 672 305
- DE-A1-102008 031 612
- US-A1- 2010 175 863
- US-A1- 2011 005 738

## Beschreibung

### Technisches Gebiet

Die Erfindung betrifft einen Wärmeübertrager, insbesondere für ein Kraftfahrzeug, nach dem Oberbegriff von Anspruch 1. Die Erfindung betrifft außerdem ein Herstellungsverfahren für einen Wärmeübertrager.

### Stand der Technik

Ein Wärmeübertrager kann beispielsweise in einer Klimaanlage eines Kraftfahrzeugs eingesetzt werden. Wärmeübertrager können auch als Ladeluftkühler im Motorbereich des Kraftfahrzeuges eingesetzt werden, insbesondere zum Kühlen von Ladeluft des Verbrennungsmotors. Der Wärmeübertrager weist hierbei mindestens einen Boden auf, in dem Rohre angeordnet sind, durch die ein Kühlmittel strömen kann. Typischerweise sind die Rohre zwischen zwei Böden angeordnet. Die Rohre sind beispielsweise als Flachrohre ausgebildet. Zur Optimierung des Strömungsverhaltens des Kühlmittels können Turbulatoren in den Rohren, insbesondere in den Flachrohren, angeordnet sein. Die Turbulatoren sind Wellrippen und in der Regel aus einem Blech gebogen.

Im Zuge der Gewichtseinsparung im Kraftfahrzeug, ist es erstrebenswert, auch das Gewicht des Wärmeübertragers zu verringern. Hierbei werden zwei Ansätze verfolgt. Zum einen werden zunehmend leichtere Materialien eingesetzt. Dies sind Materialien mit einem geringeren spezifischen Gewicht, beispielsweise Kunststoffe, die an den Stellen im Wärmeübertrager eingesetzt werden, wo dies beispielsweise auf Grund der Temperatur möglich ist. Zum anderen werden die verwendeten Wandstärken bei der Verwendung von metallischen Werkstoffen für die Rohre, den Boden und die Turbulatoren ständig verringert. Hierbei können Probleme bezüglich der Stabilität der Komponenten auftreten.

Wärmeübertrager mit einem Rohr/Boden-Aufbau sind beispielsweise aus der DE 10 2011 009 825 A1 und der DE 20 2011 109 859 U1 bekannt, die ein Flachrohr für einen Wärmeübertrager betreffen. Das Flachrohr weist zwei sich gegenüberliegende Rohrbreitseitenwandungen und eine innenliegende Turbulenzeinlage auf. Die Turbulenzeinlage weist zwei sich gegenüberliegende, profilierte Einlagenbreitseitenwandungen auf, die sich bereichsweise an jeweils einer von zwei Rohrbreitseitenwandungen abstützen. Ferner ist ein Verfahren zur Herstellung des Flachrohres und eines Wärmetauschers mit einem derartigen Flachrohr offenbart.

Die DE 20 2011 109 859 U1 offenbart ein Flachrohr mit einem Turbulator.

### Darstellung der Erfindung, Aufgabe, Lösung, Vorteile

Es ist die Aufgabe der Erfindung, einen verbesserten Wärmeübertrager zu schaffen.

Dies wird mit einem Wärmeübertrager mit den Merkmalen von Anspruch 1 erreicht.

In einem Ausführungsbeispiel der Erfindung weist ein Wärmeübertrager, insbesondere für ein Kraftfahrzeug, einen Boden auf, in dem Rohre angeordnet sind, wobei jeweils in den Rohren mindestens ein Turbulator angeordnet ist, wobei der Turbulator in einer Längserstreckung gesehen ein erstes Turbulatorende und ein zweites Turbulatorende aufweist, wobei dazwischen eine Turbulatorfläche angeordnet ist. Hierbei weist der Turbulator an mindestens einem Turbulatorende eine verstärkte Wand auf. Hierbei ist die verstärkte Wand des Turbulators an dem mindestens einen Turbulatorende dicker als die Wand der Turbulatorfläche. Der Turbulator ist bevorzugt eine Wellrippe, die jeweils innenliegend im Rohr angeordnet ist.

Bevorzugt weist der Turbulator an dem mindestens einen Turbulatorende einen gefalzten Bereich auf. Der gefalzte Bereich kann hierbei zuerst umgefaltet und danach gewalzt sein.

In einem bevorzugten Ausführungsbeispiel weist der Tabulator an dem ersten und dem zweiten Tabulatorende eine verstärkte Wand und/oder einen gefalzten Bereich auf.

Hierbei beträgt eine Länge der verstärkten Wandstärke ausgehend vom ersten und/oder zweiten Turbulatorende in Längserstreckungsrichtung des Turbulators gesehen, weniger als 100 mm, bevorzugt zwischen 5 mm und 50 mm, insbesondere zwischen 10 mm und 30 mm, besonders bevorzugt etwa 20mm.

Bevorzugt weist die verstärkte Wand mindestens eine doppelte Wandstärke verglichen mit einer Dicke der Turbulatorfläche auf.

In einer Ausgestaltung des Wärmeübertragers ist der Turbulator ein quergefalzter Turbulator.

Der Erfindung liegt hierbei der folgende Gedanke zugrunde. Durch die verstärkte Wand kann der Turbulator eine erhöhte Stabilität erlangen. Ein, in dem jeweiligen Rohr angeordneter Turbulator, führt hierbei zu einer Verstärkung einer Zugankerfunktion an den Rohrenden. Dies kann insbesondere dann erfolgen, wenn die Rohre und der Turbulator oder die Turbulatoren in den Boden, durch beispielsweise einen Lötprozess, befestigt sind. Hierbei sind die zur Herstellung des Turbulators verwendeten Bleche zumindest bereichsweise lötplattiert. An den lötplattierten Bereichen kann der Turbulator mit dem Rohr verbunden sein. Beim Verschließen der Rohr/Boden-Blöcke kommt es vorteilhafterweise nicht mehr zu einer Deformation der in Eckbereichen angeordneten Rohre und/oder des Turbulator im Eckbereich.

Hierbei ist die größere Wandstärke der verstärkten Wand nur in den unmittelbar betroffenen Bereichen, insbesondere an den Verbindungsstellen von Rohr/Turbulator und Boden, realisiert. Die verstärkte Wand kann somit lokal begrenzt eingesetzt werden. Somit kann insgesamt eine hohe Gewichtseinsparung erreicht werden, ohne dass Einbußen bei der Stabilität hingenommen werden müssen. Diese gezielte Verstärkung der Wand an mindestens einem Turbulatorende ist insbesondere auch gegenüber einer größeren Rippendichte, die zur Stabilitätserhöhung eingesetzt werden kann, vorteilhaft. Insgesamt spart die lokale Verstärkung der Wand Material für den Wärmeübertrager ein. Somit leistet die verstärkte Wand ebenfalls einen Beitrag zur Kostenoptimierung des Wärmeübertragers.

Die Aufgabe wird ferner durch ein Herstellungsverfahren für einen Wärmeübertrager mit einem Boden und in dem Boden angeordneten Rohren, die mindestens einen Turbulator aufweisen, gelöst. Das Herstellungsverfahren geht hierbei von einem Blech oder Coil aus, wobei mindestens ein Seitenrand des Blechs oder Coils in Längsrichtung umgefaltet wird. Die Wand wird als gefalzte Wand bezeichnet, wenn die aufeinander angeordneten Wandabschnitte im Wesentlichen parallel zueinander liegen. Bevorzugt wird das umgefaltete Coil oder Blech anschließend mittels einer Turbulatorwalze gewalzt.

Der eine Seitenrand kann hierbei ein erster Seitenrand sein und ein zweiter Seitenrand kann ebenfalls umgefaltet und gewalzt werden, so dass eine gefalzte Wand entsteht.

Bevorzugt kann das Blech oder Coil in Querrichtung gefaltet werden, um die Turbulatorgeometrie zu erzeugen.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: Ausschnitt aus einem Herstellungsverfahren für einen Wärmeübertrager,
- Fig. 2: eine photographische Darstellung eines Rohr/Boden-Blocks jeweils mit einem in einem Rohr angeordneten Turbulator gemäß den Stand der Technik und gemäß der Erfindung.

### Bevorzugte Ausführung der Erfindung

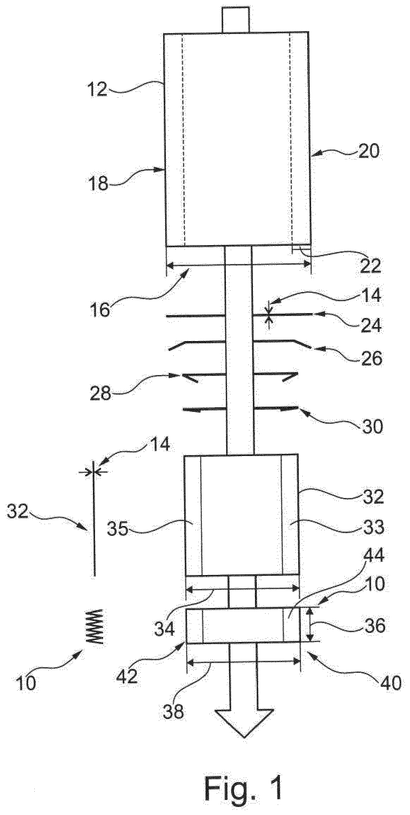

Die Figur 1 zeigt einen Ausschnitt eines Herstellungsverfahrens eines nicht dargestellten Wärmeübertragers. Der Wärmeübertrager weist hierbei einen Rohr/Boden-Block auf. In den Rohren sind innenliegend Wellrippen angeordnet, die als Turbulatoren 10 bezeichnet werden und das Strömungsverhalten eines durch die Rohre strömenden Fluids optimieren können. Zusätzlich können auch außenliegende Wellrippen zwischen den Rohren angeordnet sein. Hierbei kann ein Rohr/Rippen-Block ausgebildet werden.

Der dargestellte Verfahrensschritt zeigt die Herstellung des Turbulators 10. Der Turbulator 10 ist aus einem Blech 12 gefaltet, welches als Coil 12 bezeichnet wird. Das Coil 12 kann von einer Rolle geschnitten sein oder als vorgeformtes Blech 12 vorliegen. Bevorzugt ist das Blech 12 ein quergewalztes Blech 12. Das Blech 12 weist eine Blechdicke 14 und eine Blechbreite 16 auf. Die Dicke 14 ist in Figur 1 an einem Blech 12, 32, welches einen Schnitt des Blechs 12 oder 32 zeigt, durch zwei Pfeile dargestellt. Das Blech 12 weist Seitenränder 18 und 20 auf.

Ausgehend von den Seitenrändern 18 und 20 wird das Blech 12 jeweils mit einer Falzbreite 22 umgebogen. Das Umbiegen erfolgt in mehreren Schritten, von denen exemplarisch jeweils das Blech 12 in Positionen 24, 26, 28 und 30 gezeigt ist. Durch das Umbiegen entsteht ein gefalztes Blech 32, welches eine geringere Breite 34 aufweist. Das gefalzte Blech 32 weist hierbei die Breite 34 auf, die um die doppelte Falzbreite 22 kleiner ist, als die Breite 16 des Blechs 12. Hierbei beträgt die Falzbreite 22 bevorzugt weniger als 100 mm, bevorzugt zwischen 5 mm und 50 mm, insbesondere zwischen 10 mm und 30 mm, besonders bevorzugt etwa 20 mm. Zwischen dem Turbulatorende 40 und dem Turbulatorende 42 ist eine Turbulatorfläche 33 ausgebildet. Hierbei ergeben die zweifache Falzbreite 22 und die Länge der Turbulatorfläche 33 einer Turbulatorlänge 38, die wiederum in etwa der Länge der Rohre des Rohr/Boden-Pakets entspricht.

Im nächsten Verfahrensschritt wird das Blech 34 in Längsrichtung gefaltet, so dass der Turbulator 10 entstanden ist. Der Turbulator 10 weist hierbei eine Breite 36 auf und die Turbulatorlänge 38. Die Turbulatorlänge 38 entspricht hierbei in etwa der Blechbreite 34. Der Turbulator 10 weist hierbei an beiden Turbulatorenden 40 und 42 eine verstärkte Wand 44 auf. Die verstärkte Wand 44 umfasst hierbei umgebogenes und gewalztes Blechmaterial. Bevorzugt ist die verstärkte Wand 44 doppelt so dick wie das Blech 12. Die verstärkte Wand 44 weist bevorzugt die doppelte Blechdicke 14 auf. Die verstärke Wand 44 kann aber auch die dreifache oder vierfache Blechdicke 14 aufweisen. Für den Fall der dreifachen und/oder vierfachen Blechdicke 14 ist der Falzvorgang derart gestaltet, dass die dreifache oder vierfache Wandstärke 44 entsteht.

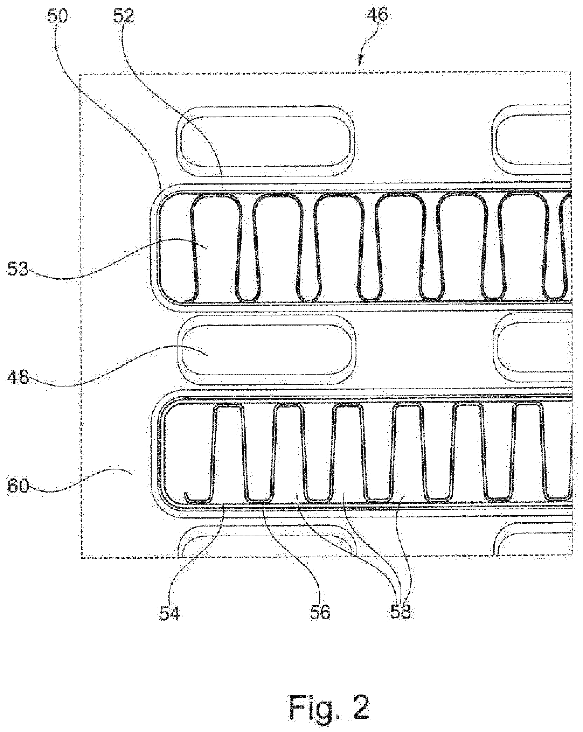

Figur 2 zeigt eine Darstellung eines Ausschnittes eines Wärmeübertragers 46 mit einem Boden 48, in dem Rohre 50 angeordnet sind, die hier als Flachrohre 50 ausgebildet sind. Der obere Teil von Figur 2 zeigt einen Turbulator 52, der nach dem Stand der Technik eine einfache Wandstärke 53 aufweist. Die Wandstärke 53 erstreckt sich über eine komplette Länge des Turbulators 52. Der Turbulator 52 weist hierbei ein Omega-Profil auf, welches für eine Instabilität des Turbulators 52 im Rohr 50 sorgen kann.

In der unteren Hälfte der Figur 2 ist in einem Rohr 54 ein Turbulator 56 angeordnet. Der Turbulator 56 ist ein erfindungsgemäßer Turbulator 10, der zumindest bereichsweise insbesondere an den Turbulatorenden 40 und/oder 42 eine verstärkte Wand 44 aufweist. Gleiche Gegenstände sind mit denselben Bezugszeichen bezeichnet. Die Turbulatorwände 58 weisen im Wesentlichen eine U-Form auf. Hierbei verlaufen die Turbulatorwände 58 im Wesentlichen senkrecht zu einer Rohrwand 60 des Rohrs 54. Die Stabilität des Turbulators 56 wird durch die verstärkte Wand 44 erzeugt, die mindestens eine doppelte Wandstärke verglichen mit der Blechdicke 14 aufweist. Die verstärkte Wand 44 kann aber auch dicker sein als die zweifache Blechdicke 14. Die verstärkte Wand 44 kann bevorzugt dreifach oder vierfach oder allgemein mehrfach so dick sein, verglichen mit der Blechdicke 14. Die Turbulatorfläche 33 ist zwischen den Turbulatorenden 40 und 42 ausgebildet. Die Turbulatorfläche 33 weist hierbei die Wandstärke 14 des Blechs 12 auf.

## Patentansprüche

1. Wärmeübertrager, insbesondere für ein Kraftfahrzeug, mit einem Boden (48), in dem Rohre (54) angeordnet sind, wobei in den Rohren (54) mindestens ein Turbulator (10, 56) angeordnet ist, wobei der Turbulator (10, 56) in einer Längserstreckung gesehen ein erstes Turbulatorende (40) und ein zweites Turbulatorende (42) aufweist, wobei dazwischen eine Turbulatorfläche (33) angeordnet ist, **dadurch gekennzeichnet, dass** der Turbulator (10, 58) an mindestens einem Turbulatorende (40) eine verstärkte Wand (44) aufweist, wobei die verstärkte Wand (44) des Turbulators (10, 58) an dem mindestens einen Turbulatorende (40, 42) dicker ist als die Wand der Turbulatorfläche (33), so dass eine Verstärkung der Zugankerfunktion an einem Rohrende der Rohre bewirkt wird.

2. Wärmeübertrager nach Anspruch 1, **dadurch gekennzeichnet, dass** der Turbulator (10, 56) an dem mindestens einen Turbulatorende (40, 42) einen gefalzten Bereich (35) aufweist.

3. Wärmeübertrager nach Anspruch 1 oder 2, **dadurch gekennzeichnet, dass** der Turbulator (10, 56) an dem ersten und dem zweiten Turbulatorende (40, 42) eine verstärkte Wand (44) und/oder einen gefalzten Bereich (35) aufweist.

4. Wärmeübertrager nach einem der vorhergehenden Ansprüche, **dadurch gekennzeichnet, dass** in Längserstreckungsrichtung des Turbulators (10, 56) gesehen, eine Länge der verstärkten Wand (44) ausgehend vom ersten und/oder zweiten Turbulatorende (40, 42) weniger als 100 mm, bevorzugt zwischen 5 mm und 50 mm, insbesondere zwischen 10 mm und 30 mm, bevorzugt etwa 20 mm beträgt.

5. Wärmeübertrager nach einem der vorhergehenden Ansprüche, **dadurch gekennzeichnet, dass** die verstärkte Wand (44) mindestens eine doppelte Wandstärke verglichen mit einer Blechdicke (14) umfasst.

6. Wärmeübertrager nach einem der vorhergehenden Ansprüche, **dadurch gekennzeichnet, dass** der Turbulator (10, 58) ein quergefalzter Turbulator ist.

7. Herstellungsverfahren für einen Wärmeübertrager (46) mit einem Boden (48) und in dem Boden (48) angeordneten Rohren (54), die mindestens einen Turbulator (10, 56) aufweisen, **dadurch gekennzeichnet, dass** ein Blech (12) geschnitten wird und dass mindestens ein Seitenrand (18, 20) des Blechs (12) in Längsrichtung umgefaltet wird.

8. Herstellungsverfahren nach Anspruch 7, **dadurch gekennzeichnet, dass** das umgefaltete Blech (32) mittels einer Turbulatorwalze gewalzt wird, bevorzugt im Bereich des gefalzten Blechs (35).

9. Herstellungsverfahren nach Anspruch 7 oder 8, **dadurch gekennzeichnet, dass** der eine Seitenrand (18, 20) ein erster Seitenrand (18, 20) ist und ein zweiter Seitenrand (18, 20) umgefaltet und gewalzt wird.

10. Herstellungsverfahren nach einem der Ansprüche 7 bis 9, **dadurch gekennzeichnet, dass** das Blech (12) in Querrichtung gefaltet wird, um die Turbulatorgeometrie zu erzeugen.

## Claims

1. A heat exchanger, particularly for a motor vehicle, having a bottom (48) in which tubes (54) are arranged, wherein at least one turbulator (10, 56) is arranged in the tubes (54), wherein the turbulator (10, 56), viewed in a longitudinal extension, has a first turbulator end (40) and a second turbulator end (42), wherein a turbulator area (33) is arranged there between, **characterised in that** the turbulator (10, 58) has a reinforced wall (44) at at least one turbulator end (40), wherein the reinforced wall (44) of the turbulator (10, 58) at the at least one turbulator end (40, 42) is thicker than the wall of the turbulator area (33), so that a reinforcement of the tie rod feature is caused at one tube end of the tubes.

2. The heat exchanger according to claim 1, **characterised in that** the turbulator (10, 56) has a folded region (35) at the at least one turbulator end (40, 42).

3. The heat exchanger according to claim 1 or 2, **characterised in that** the turbulator (10, 56) has a reinforced wall (44) and/or a folded region (35) at the first and second turbulator end (40, 42).

4. The heat exchanger according to one of the preceding claims, **characterised in that**, viewed in the longitudinal direction of the turbulator (10, 56), a length of the reinforced wall (44) proceeding from the first and/or second turbulator end (40, 42) is less than 100 mm, preferably between 5 mm and 50 mm, particularly between 10 mm and 30 mm, preferably about 20 mm.

5. The heat exchanger according to one of the preceding claims, **characterised in that** the reinforced wall (44) comprises at least a double wall thickness compared with a sheet thickness (14).

6. The heat exchanger according to one of the preceding claims, **characterised in that** the turbulator (10, 58) is a cross-folded turbulator.

7. A production method for a heat exchanger (46) having a bottom (48) and tubes (54) arranged in the bottom (48) and having at least one turbulator (10, 56), **characterised in that** a metal sheet (12) is cut and that at least one side edge (18, 20) of the metal sheet (12) is folded over in the longitudinal direction.

8. The production method according to claim 7, **characterised in that** the folded over sheet (32) is rolled by means of a turbulator roller, preferably in the region of the folded sheet (35).

9. The production method according to claim 7 or 8, **characterised in that** the one side edge (18, 20) is a first side edge (18, 20) and a second side edge (18, 20) is folded over and rolled.

10. The production method according to one of claims 7 to 9, **characterised in that** the metal sheet (12) is folded in the cross direction in order to produce the turbulator geometry.

## Revendications

1. Echangeur de chaleur, en particulier pour un véhicule automobile, comprenant un plateau (48) dans lequel sont disposés des tubes (54), où au moins un turbulateur (10, 56) est disposé dans les tubes (54), où le turbulateur (10, 56), vu dans une étendue dans le sens de la longueur, présente une première extrémité de turbulateur (40) et une seconde extrémité de turbulateur (42), où une surface de turbulateur (33) est disposée entre les deux extrémités, **caractérisé en ce que** le turbulateur (10, 58), sur au moins une extrémité de turbulateur (40), présente une paroi renforcée (44), où la paroi renforcée (44) du turbulateur (10, 58) est plus épaisse, au niveau de l'extrémité de turbulateur (40, 42) au moins au nombre de un, que la paroi de la surface de turbulateur (33), de sorte qu'un renforcement de la fonction de tirant d'ancrage est provoqué au niveau d'une extrémité tubulaire des tubes.

2. Echangeur de chaleur selon la revendication 1, **caractérisé en ce que** le turbulateur (10, 56), au niveau de l'extrémité de turbulateur (40, 42) au moins au nombre de un, présente une zone repliée (35).

3. Echangeur de chaleur selon la revendication 1 ou 2, **caractérisé en ce que** le turbulateur (10, 56), au niveau de la première et de la seconde extrémité de turbulateur (40, 42), présente une paroi renforcée (44) et / ou une zone repliée (35).

4. Echangeur de chaleur selon l'une quelconque des revendications précédentes, **caractérisé en ce que**, vue dans une direction d'étendue longitudinale du turbulateur (10, 56), une longueur de la paroi renforcée (44), à partir de la première et / ou de la seconde extrémité de turbulateur (40, 42), est inférieure à 100 mm, de préférence comprise entre 5 mm et 50 mm, en particulier comprise entre 10 mm et 30 mm, de préférence égale à 20 mm environ.

5. Echangeur de chaleur selon l'une quelconque des revendications précédentes, **caractérisé en ce que** la paroi renforcée (44) comprend au moins une épaisseur de paroi doublée, par comparaison avec une épaisseur de tôle (14).

6. Echangeur de chaleur selon l'une quelconque des revendications précédentes, **caractérisé en ce que** le turbulateur (10, 58) est un turbulateur plié dans le sens transversal.

7. Procédé de fabrication pour un échangeur de chaleur (46) comprenant un plateau (48) et des tubes (54) disposés dans le plateau (48), tubes qui présentent au moins un turbulateur (10, 56), **caractérisé en ce qu'**une tôle (12) est coupée et **en ce qu'**au moins un bord latéral (18, 20) de la tôle (12) est replié dans le sens de la longueur.

8. Procédé de fabrication selon la revendication 7, **caractérisé en ce que** la tôle repliée (32) est roulée au moyen d'un cylindre de turbulateur, de préférence dans la zone de la tôle pliée (35).

9. Procédé de fabrication selon la revendication 7 ou 8, **caractérisé en ce que** l'un des bords latéraux (18, 20) est un premier bord latéral (18, 20), et un second bord latéral (18, 20) est replié et roulé.

10. Procédé de fabrication selon l'une quelconque des revendications 7 à 9, **caractérisé en ce que** la tôle (12) est pliée dans le sens transversal, pour produire la géométrie du turbulateur.
